# EUROPEAN PATENT APPLICATION

(11) **EP 4 588 888 A1**
(43) Date of publication of application: **23.07.2025**
(21) Application number: 24152792.8
(22) Date of filing: 19.01.2024
(51) Int. Cl.: C01B 3/02, C01B 3/38, C01B 3/48

(54) **METHOD FOR SHUTTING DOWN A PLANT COMPRISING A HYDROGEN PRODUCTION SYSTEM**

(71) Applicant: Yara International ASA, 0277 Oslo (NO)
(72) Inventor: Van Vooren, Roel, 9940 Ertvelde (BE); Van Drongelen, Frank, 4571TD Axel (NL)
(74) Representative: De Clercq & Partners

(57) **Abstract**

The present application provides for a method for the shutdown of a chemical plant comprising a hydrogen production system, in particular an ammonia production plant, where the hydrogen production system comprises a reforming unit, in particular a primary reformer with a furnace and a reactor, one or more shift reactors, a CO₂ removal unit and a methanation unit; wherein a reforming unit, in particular the primary reformer reactor, is supplied with a feed of a gaseous hydrocarbon, and wherein the reforming unit, in particular the furnace of the primary reformer reactor, is supplied with a fuel gas; wherein the method comprises the steps of (i) reducing the fuel gas supply to the reforming unit, in particular to the furnace of the primary reformer, thereby reducing the temperature in the reforming unit; and then (ii) stopping the supply of the gaseous hydrocarbon process gas to the reforming unit, in particular to the reactor of the primary reformer.

## Description

### Field

The present disclosure generally relates to the operation, in particular the shutdown, of an industrial chemical plant equipped with a hydrogen production system. This disclosure concerns, in particular, a method for the operation of an ammonia-producing production facility with a hydrogen production system more specifically a method for the closure or shutdown of an ammonia-producing production facility with a hydrogen production system.

### Background

A typical modern ammonia-producing plant first converts natural gas (i.e., methane) or LPG (liquefied petroleum gas such as propane and butane) or petroleum naphtha into gaseous hydrogen. The method of producing hydrogen from hydrocarbons is known as steam reforming. Hydrogen is then combined with nitrogen to produce ammonia through the Haber-Bosch process.

Starting with a feedstock for natural gas, the first step of the process used in the production of hydrogen is to remove sulfur compounds from the natural gas because sulfur deactivates the catalysts used in the following steps. In a desulfurization unit, sulfur compounds are typically converted into gaseous hydrogen sulfide by catalytic hydrogenation.

The sulfur-free natural gas feedstock is then subjected to a catalytic steam reforming step, in a reforming section comprising of one or more reforming units, such as a pre-reformer, and/or a primary and secondary reformer, to form hydrogen and carbon monoxide.

CH₄ + H₂O → CO + 3H₂

This reaction is highly endothermic, and a large amount of heat must be added to the reactor to maintain a constant temperature. Thus, a reformer unit, particularly the primary reformer, usually consists of a furnace, usually fueled by natural gas, and a reactor.

The hydrogen-containing product stream leaving the reforming section is further purified in a purification section, comprising the steps of shift conversion, carbon dioxide removal, methanation, and/or drying in a molecular sieve bed, and a liquid nitrogen flush in a cold box.

In the catalytic shift conversion, carried out in one or more shift reactors, usually first in a high-temperature shift reactor operating at a temperature between 340 °C and 420 °C and subsequently in a low-temperature shift reactor operating at a temperature between 190 °C and 220 °C, the carbon monoxide is converted into carbon dioxide and more hydrogen.

CO + H₂O → CO₂ + H₂

The carbon dioxide is then removed in a CO₂ removal unit, either by absorption in suitable solutions, such as an aqueous ethanolamine solution, or by adsorption into pressure fluctuation adsorbers (PSA or pressure swing adsorption) using solid adsorption media.

The carbon dioxide depleted hydrogen-containing stream is further purified, in particular to separate non-hydrogen and hydrogen gas, such as by a liquid nitrogen wash, and/or to convert oxides harmful to the ammonia converter into non-oxides. In particular, the hydrogen-rich stream leaving the CO₂ removal unit is catalytically methanized in a methanation unit (hereinafter also referred to as a methanator) to remove any small residual amounts of carbon monoxide or carbon dioxide from the hydrogen.

CO + 3H₂ → CH₄ + H₂O

CO₂ + 4H₂ → CH₄ +2H₂O

When washing with liquid nitrogen, traces of solvents (water, methanol), carbon dioxide, and other compounds are first removed in an adsorber unit comprising molecular sieves, and the resulting hydrogen-rich gas is further scrubbed in a cold box with high-pressure and partially liquefied nitrogen, usually fed by an air separation unit, eliminating further impurities, such as argon and methane.

To produce the desired final product ammonia, the purified hydrogen is then catalytically reacted with nitrogen (derived from process air) to form anhydrous liquid ammonia. This step is known as the ammonia synthesis loop - also known as the Haber-Bosch process.

The hydrogen production system, comprising a desulphurization unit, one or more reformer units, in particular the primary and secondary reformer units, one or more shift reactors, the CO₂ removal unit, the methanation unit, the molecular sieve adsorber and the cold box or cooler, constitutes the "front" or "front end" of an ammonia production unit, while the ammonia synthesis loop constitutes the "back" or "back end" of an ammonia production unit.

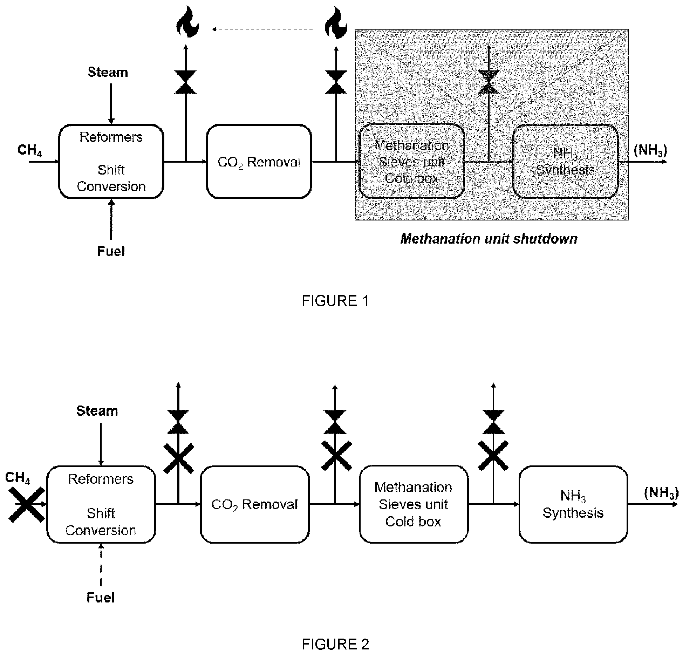

As schematically represented in FIG. 1, a planned stop or shutdown of an ammonia production plant not according to the present disclosure involves stopping the methanization unit, thereby stopping the methanization step as well as the units and reactions downstream of the methanization unit, before stopping the different units and reactors upstream of the methanation unit. This means that all the process gas is vented/flared upstream of the methanation unit, resulting in large amounts of emissions, particularly as a lot of time is needed to stabilize the steam circuits and the inlet temperature of the shift reactor(s), to avoid condensation. This loss in process gas, and hence, loss of natural gas feedstock, goes hand in hand with a significant cost.

There is thus a need in the art for an improved method for shutting down an ammonia production plant, particularly a hydrogen production section of such plant.

### Summary

The inventors have developed an improved method for shutting down a chemical plant comprising a hydrogen production system, particularly for shutting down an ammonia-producing chemical plant comprising a hydrogen production system, that addresses one or more of the above-mentioned drawbacks.

The present disclosure generally provides a method for shutting down a chemical plant comprising a hydrogen production system, particularly an ammonia production plant, wherein the hydrogen production system comprises a reforming unit, wherein the reforming unit is provided with a feed of a process gas comprising a gaseous hydrocarbon, particularly natural gas, and wherein the reforming unit is further provided with a feed of a fuel gas; wherein the method comprises the steps of (i) reducing the feed of the fuel gas to the reforming unit, thereby lowering the temperature in the reforming unit; and subsequently, (ii) stopping the feed of the process gas comprising the gaseous hydrocarbon to the reforming unit.

More in particular, the present disclosure provides a method for shutting down a chemical plant comprising a hydrogen production system, particularly an ammonia production plant, wherein the hydrogen production system comprises a primary reformer, a secondary reformer, one or more shift reactors, a CO₂ removal unit and a methanation unit, particularly wherein the shift reactors comprise a high-temperature shift reactor operating at a temperature of about 340°C to about 420 °C and a low-temperature shift reactor operating at a temperature of about 190°C to about 220°C, wherein the primary reformer comprises a reactor and a furnace; wherein the reactor of the primary reformer is provided or supplied with a feed of a process gas comprising a gaseous hydrocarbon, and wherein the furnace of the primary reformer is provided or supplied with a feed of a fuel gas; wherein the method comprises the steps of (i) reducing the feed or supply of the fuel gas to the furnace of the primary reformer, in particular without a proportionate reduction in the feed or supply of the process gas comprising the gaseous hydrocarbon, thereby reducing the temperature in the reactor of the primary reformer, particularly the temperature at an outlet of the reactor of the primary reformer; and subsequently, (ii) stopping the feed or supply of the process gas comprising the gaseous hydrocarbon to the reactor of the primary reformer.

Advantageously, the emissions associated with shutting down the hydrogen production system in general, and the ammonia production plant in particular, by first shutting down the methanation unit of the hydrogen production system, are significantly reduced and essentially eliminated completely. Since the supply of the process gas to the reforming unit, particularly the primary reformer, is stopped, the process gas or natural gas is no longer circulated through the hydrogen production system and thus no process gas or natural gas needs to be vented/flared. This results in considerable cost savings as well. In addition, the time in which the shutdown activities of the chemical plant are completed is significantly reduced.

In general, stopping the feed of the process gas can lead to an excessive temperature rise or temperature shock in the reforming unit, particularly the primary reformer, which negatively affects the catalyst activity and the mechanical strength of the catalyst tubes. Advantageously, the shut-down method according to the present disclosure does not cause a temperature shock in the reforming unit, particularly the primary reformer. In the method of the present disclosure, prior to shutting down the feed or supply of the process gas, the fuel gas flow and pressure to the reforming unit, particularly the primary reformer, is reduced without a proportionate reduction in the supply or feed of the process gas. This results in a lower temperature in the reactor of the reforming unit and, at the same time, a lower conversion of the gaseous hydrocarbon (methane) to hydrogen. This way, a too high temperature rise in the reforming unit, particularly in the reactor of the primary reformer, is avoided when the process feed comprising a gaseous hydrocarbon, particularly the natural gas process feed, is stopped, and the catalyst inside the reforming unit, and the reformer itself is preserved. In particular embodiments, in step (i), the temperature at the outlet of the reforming unit is reduced by between 35°C and 70°C, particularly by between 40°C and 50°C below the normal operating temperature.

In particular embodiments, step (i) is performed between 15 and 60 min prior to step (ii). In other embodiments, the operating capacity of the chemical manufacturing plant is reduced to a minimum operating capacity prior to step (i). This facilitates the subsequent shutdown process.

In particular embodiments, step (i) comprises reducing the pressure and/or flow rate of the fuel gas to the furnace of the reforming unit. More in particular, the pressure of the feed of fuel gas is reduced by at least 50%, particularly by at least 60% or 70%, such as by between 60% and 90% or between 70% and 80%; and/or the flow of the feed of fuel gas is reduced by at least 40%, particularly by at least 50%, such as by between 50% and 75% or between 55% and 65%. In certain embodiments, the method of the present disclosure comprises a simulation step prior to step (i), wherein said simulation step comprises simulating a method for shutting down a chemical manufacturing plant, thereby obtaining an optimal rate for reducing the pressure and/or flow of the feed of fuel gas and/or an optimal rate for reducing the temperature at the outlet of the reforming unit. Advantageously, the calculated optimal rate for reducing the pressure and flow rate of the feed of fuel gas and/or the optimal rate for reducing the temperature at the outlet of the reforming unit are applied in step (i).

In particular embodiments, step (ii) of the method according to the present disclosure further comprises simultaneously stopping the air flow to a secondary reformer. In further particular embodiments, after step (ii), steam is passed through the hydrogen production system, and the steam is gradually replaced by nitrogen.

### Description of the Figures

FIGURE 1 schematically represents a shut-down process of an ammonia production plant not according to the present disclosure.
FIGURE 2 represents an embodiment of a method according to the present disclosure.

### Detailed description

Before the present system and method of the present disclosure are described, it is noted that this disclosure is not limited to particular systems and methods or combinations described, since such systems and methods and combinations may, of course, vary. It is also to be understood that the terminology used herein is not intended to be limiting, since the scope of the present disclosure will be limited only by the appended claims.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or openended and do not exclude additional, non-recited members, elements or method steps. It will be appreciated that the terms "comprising", "comprises" and "comprised of" as used herein comprise the terms "consisting of", "consists" and "consists of".

The recitation of numerical ranges by endpoints includes all numbers and fractions subsumed within the respective ranges, as well as the recited endpoints.

The term "about" or "approximately" as used herein when referring to a measurable value such as a parameter, an amount, a temporal duration, and the like, is meant to encompass variations of +/-10% or less, preferably +/-5% or less, more preferably +/-1% or less, and still more preferably +/-0.1 % or less of and from the specified value, insofar such variations are appropriate to perform in the present disclosure. It is to be understood that the value to which the modifier "about" or "approximately" refers is itself also specifically, and preferably, disclosed.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, *e.g*., any ≥3, ≥4, ≥5, ≥6 or ≥7 etc. of said members, and up to all said members.

All references cited in the present specification are hereby incorporated by reference in their entirety. In particular, the teachings of all references herein specifically referred to are incorporated by reference.

Unless otherwise defined, all terms used in the present disclosure, including technical and scientific terms, have the meaning as commonly understood by one of ordinary skill in the art to which the present disclosure belongs. By means of further guidance, term definitions are included to better appreciate the teaching of the present disclosure.

In the following passages, different aspects of the present disclosure are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present disclosure. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the present disclosure, and form different embodiments, as would be understood by those in the art. For example, in the appended claims, any of the claimed embodiments can be used in any combination.

It is to be understood that other embodiments may be utilised and structural or logical changes may be made without departing from the scope of the present disclosure. The following detailed description, therefore, is not to be taken in a limiting sense, and the scope of the present disclosure is defined by the appended claims.

The present disclosure generally provides an improved method for shutting down a chemical plant comprising a hydrogen production system, such as an ammonia production plant.

Hydrogen production systems are well-known to the skilled person and typically comprise:
- a reforming section, also referred to as a steam reforming section, wherein a syngas, comprising hydrogen and CO, is produced by catalytically reacting a process gas comprising hydrocarbons, particularly methane, with water (steam). The reforming section comprises one or more reforming units, such as a pre-reformer, a primary and secondary reformer. A primary reformer typically comprises a furnace or multiple burners, provided with a fuel gas, e.g. natural gas, and a reactor, provided with a feed of a gaseous hydrocarbon, e.g. natural gas. The reactor is typically in the form of a plurality of reaction tubes comprising the reforming catalyst, also referred to as catalyst tubes, and is heated by the furnace or the burners;
- a shift conversion section, particularly comprising a high-temperature shift reactor operating at a temperature of about 340°C to about 420 °C and a low-temperature shift reactor operating at a temperature of about 190°C to about 220°C, wherein water (steam) reacts with the CO present in the syngas comprising hydrogen and CO, thereby obtaining additional hydrogen and CO₂;
- a CO₂ removal unit, for the removal of the carbon dioxide from the hydrogen containing stream generated in the shift conversion section; and
- one or more further purification units, for removing further impurities, particularly impurities which may adversely affect the downstream use of the hydrogen. Examples include a methanation unit, wherein the carbon oxides (CO and CO₂) are converted into methane; and/or a liquid nitrogen wash section or cold box, wherein gaseous high-pressure nitrogen is partially liquefied and is used as a washing agent to wash out impurities, such as argon, and methane, from the hydrogen product stream, and to liquefy excess nitrogen.

A production cycle of a chemical manufacturing unit or plant generally comprises a start-up phase, wherein the different processes and reactions are initiated; a continuous and essentially constant phase or operation mode, wherein processes operate and product is manufactured at a given working load or operating capacity that is usually kept constant during a production cycle; and a shutdown phase, wherein the processes occurring during the operation mode and at a given operating capacity are slowly and safely stopped. The method of the present disclosure is applied in the shutdown phase of the production cycle of the chemical plant. In particular, the method of the present disclosure is used for a planned shutdown of the chemical manufacturing plant, for instance to allow for plant maintenance, plant inspection, plant upgrade and revamping, and the like.

An aspect of the present disclosure is a method for shutting down a chemical manufacturing plant comprising a hydrogen production system, wherein the hydrogen production system comprises a reforming unit for conversion of a gaseous hydrocarbon in a process gas into hydrogen, wherein the reforming unit is provided with (i) a feed of a process gas comprising a gaseous hydrocarbon, and (ii) with a feed of a fuel gas; wherein the method comprises the steps of (i) reducing the feed of the fuel gas to the reforming unit compared to the feed of the fuel gas during the constant operation mode of the chemical plant, particularly without a proportionate reduction in the feed of the process gas, thereby reducing the temperature in the reforming unit; and subsequently, (ii) stopping the feed of the process gas comprising the gaseous hydrocarbon to the reforming unit.
In particular embodiments, the reforming unit comprises a furnace and a reactor, and the furnace of the reforming unit is provided with a feed of a fuel gas, and the reactor of the reforming unit is provided with a feed of a process gas comprising a gaseous hydrocarbon, wherein, in step (i), the feed of the fuel gas to the furnace of the reforming unit is reduced, particularly without a proportionate reduction in the feed of the process gas to the reactor of the reforming unit, thereby reducing the temperature in the reactor of the reforming unit; and subsequently, (ii) the feed of the process gas comprising the gaseous hydrocarbon to the reactor of the reforming unit is stopped.

In a particular embodiment, the present application provides a method for shutting down a chemical plant comprising a hydrogen production system,
wherein the hydrogen production system comprises a reforming unit, one or more shift reactors, a CO₂ removal unit and a methanation unit, wherein the reforming unit comprises a primary reformer and a secondary reformer;
wherein the primary reformer, particularly the reactor of the primary reformer is provided with a feed of a process gas comprising a gaseous hydrocarbon, and wherein the primary reformer, particularly the furnace of the primary reformer, is provided with a feed of a fuel gas;
wherein the method comprises the steps of
   (i) reducing the feed of the fuel gas to the primary reformer, particularly to the furnace of the primary reformer, compared to the feed of the fuel gas during the constant operation mode of the chemical plant, particularly without a proportionate reduction in the feed of the process gas, thereby reducing the temperature of the primary reformer, particularly the temperature in the reactor or at an outlet of the primary reformer; and subsequently,
   (ii) stopping the feed of the process gas comprising the gaseous hydrocarbon to the primary reformer, particularly to the reactor of the primary reformer.

Advantageously, the emissions associated with shutting down a hydrogen production system by stopping the methanation unit are significantly reduced and essentially completed eliminated: by stopping the feed of the process gas to the reforming unit, particularly the primary reformer, no process gas or natural gas is supplied to the hydrogen production system, and no process gas or natural gas needs to be vented/flared. In addition, it was further observed that the time in which the shutdown activities of the chemical manufacturing plant are completed is significantly reduced, saving both on downtown of the plant and manpower.

Prior to step (i), the chemical plant comprising a hydrogen production system is typically operating in a constant operation mode, and operates at a given operating capacity. In particular embodiments, the operating capacity of the chemical manufacturing plant is reduced to a minimum operating capacity prior to step (i), wherein the process conditions are adapted to produce a minimum amount of product. This facilitates the subsequent shutdown process. For instance, in order to produce a minimum of product, both the feed of the fuel gas and the process gas to the reforming unit, particularly the primary reformer, are adjusted proportionally and simultaneously, in order to maintain the temperature and hydrocarbon conversion in the reforming unit.

Advantageously, the shut-down method according to the present disclosure does not cause a temperature shock in the reforming unit, particularly the primary reformer. In step (i) of the method of the present disclosure, i.e. prior to shutting down or stopping the feed of the process gas, the feed of the fuel gas to the reforming unit, particularly to the primary reformer, is reduced without a proportionate reduction in the feed or supply of the process gas. In general, stopping the feed of the process gas may lead to a too high temperature rise or temperature shock in the reforming unit, particularly the primary reformer, which negatively affects the catalyst activity and the mechanical strength of the catalyst tubes. As the steam reforming reaction of the process gas is an endothermic reaction, the disproportionate reduction in the feed or supply of the fuel gas compared to the process gas is insufficient to maintain the temperature in the reactor of the reforming unit, particularly in the reactor of the primary reformer. The temperature in the reactor of the reforming unit, and, hence, also at the outlet thereof, will be reduced. This goes hand in hand with a reduced conversion of the gaseous hydrocarbon, particularly methane, in the reforming unit. This way, a too high temperature rise in the reforming unit, particularly in the reactor of the primary reformer, upon stopping the natural gas process feed is avoided, and the catalyst inside the reforming unit, and the reformer itself is preserved.

In particular embodiments, in step (i) the temperature in the reactor of the reforming unit, particularly in the reactor of the primary reformer, or at the outlet thereof, is reduced by between 35°C and 70°C, particularly by between 40°C and 50°C, compared to the temperature in the primary reformer in a constant operation mode or constant operation conditions. In further embodiments, the conversion of the hydrocarbon in the process gas, particularly methane, to hydrogen in the reactor of the reforming unit, particularly in the reactor of the primary reformer is reduced. For instance, the hydrocarbon concentration, such as the methane concentration, in the hydrogen containing product stream at the outlet of the reforming unit, particularly at the outlet of the primary reformer, during step (i) is at least 2%, 3%, 4%, 5% or 6% higher, particular between 5 and 15% higher, than in the hydrogen containing product stream at the outlet of the reforming unit, prior to performing step (i), when the hydrogen production section is in the constant operating mode, particularly when the chemical plant operates at a minimum operating capacity. Despite the lower conversion, which is generally not desired, there was little if any effect on the ammonia synthesis, downstream of the hydrogen production system.

In particular, step (i) comprises reducing the pressure and/or flow of the feed of fuel gas to the furnace of the reforming unit. It is understood that, prior to shutting down the feed or supply of the process gas in step (ii), the fuel gas flow and pressure to the reforming unit, particularly the primary reformer, is reduced without a proportionate reduction in the feed of the process gas, thus reducing the temperature in the reactor of the reforming unit and, at the same time, decreasing the conversion of the gaseous hydrocarbon (methane).

In particular embodiments, the pressure of the feed of fuel gas is reduced by at least 50%, particularly by at least 60% or 70%, such as by between 60% and 90% or between 70% and 80%; and/or wherein the flow of the feed of fuel gas is reduced by at least 40%, particularly by at least 50%, such as by between 50% and 75% or between 55% and 65%, particularly compared to the pressure and flow of the feed of fuel gas when the chemical manufacturing plant operates in constant mode, particularly when the chemical manufacturing plant operates at a minimum operating capacity.

In particular embodiments, step (i) is performed between 15 min and 60 min prior to step (ii), more in particular between 20 min and 45 min prior to step (ii). This generally allows sufficient time for a reduction in the outlet temperature of the reforming unit by about 35 to 70 °C, such as by about 40 to 50°C, particularly compared to the outlet temperature of the reforming unit when the chemical plant operates in constant mode, particularly when the chemical plant operates at a minimum operating capacity.

In step (ii), the feed of the process gas comprising the gaseous hydrocarbon, such as methane, to the reactor of the reforming unit, particularly the reactor of the primary reformer is stopped, thus stopping the reforming process.

The feed of the process gas comprising the gaseous hydrocarbon to the reforming unit may be immediately stopped, or may be reduced gradually first to the minimum operating capacity before immediately stopping the feed. In the latter case, the pressure and/or flow of the process gas to the reactor of the reforming unit is reduced gradually, albeit disproportionately with the reduction of the feed of fuel gas to the furnace of the reforming unit. In particular embodiments, step (ii) further comprises monitoring the outlet temperature of the reforming unit, particularly the primary reformer, after the feed of the process gas to the reformer was stopped, and further gradually adjusting and reducing the fuel supply to the reforming unit, particularly the primary reformer so that the outlet temperature does not exceed the normal operating temperature (i.e. when the hydrogen production system operates in the constant operating mode).

In particular embodiments, in step (ii), simultaneously or subsequently with stopping the feed of the process gas to the reforming unit, the CO₂ removal unit, the methanation unit and the units downstream of the methanation unit, such as the cold box and the ammonia synthesis section, are stopped as well.

In particular embodiments, in step (ii), simultaneously with stopping the feed of the process gas to the reforming unit, particularly to the primary reformer, the air supply to the secondary reformer is stopped.

By stopping both the supply of process gas and air, only steam is passed through the hydrogen production system. In particular embodiments, the steam is vented upstream of the CO₂ removal unit. Next, after step (ii), the steam is gradually replaced by nitrogen, to avoid condensation, and nitrogen circulation is started for final cooling. Accordingly, in certain embodiments, the method according to the present disclosure further comprises, after step (ii), the steps of passing or circulating steam through the hydrogen production system; venting the steam upstream of the carbon dioxide removal unit; gradually replacing steam by nitrogen and subsequently passing or circulating nitrogen through the hydrogen production system.

In particular embodiments, the method may further comprise a simulation step prior to step (i), wherein said simulation step comprises simulating a method for shutting down a chemical manufacturing plant, thereby calculating or obtaining an optimal rate for reducing the pressure and/or flow of the feed of fuel gas and/or an optimal rate for reducing the temperature at the outlet of the reforming unit. More in particular, the calculated optimal rate for reducing the pressure and flow of the feed of fuel gas and/or the optimal rate for reducing the temperature at the outlet of the reforming unit are applied in step (i). Advantageously, the implementation of a simulation step provides a realistic setting to optimize the conditions and parameters of the planned shutdown, and further allows the plant operators and engineers to practice the planned shutdown.

In particular embodiments, the process gas comprising a gaseous hydrocarbon is natural gas or methane. In particular embodiments, the fuel gas is natural gas. Advantageously, as natural gas is also used as a process gas it is readily available for use as fuel gas as well.

In particular embodiments, the chemical plant is an ammonia production plant, further comprising an ammonia synthesis loop downstream of the hydrogen production system.

### EXAMPLE

The improved protocol for the planned shutdown of an ammonia plant was first simulated in a virtual plant in an Operator Training Simulator (OTS) system. It was observed that the OTS simulation corresponded well with the actual process parameters when the actual plant was shut down according to the new protocol.

With reference to Figure 2, a process gas comprising gaseous hydrocarbon, such as natural gas (methane), also referred to as "feed gas", is supplied to a reforming unit, in particular comprising a primary and secondary reformer, and the resulting hydrogen containing product stream is further treated in, *inter alia,* a high-temperature and low-temperature shift conversion unit, a carbon dioxide removal unit, a methanation unit, and a cold box, and is then supplied to an ammonia synthesis loop. The reforming unit is heated with a fuel gas.

Prior to the planned shutdown, the plant capacity was reduced to 38000 Nm³/h and the fuel gas flow to the reforming unit, particularly to the furnace of the primary reformer, was reduced simultaneously and proportionally, to maintain the temperature and methane conversion in the reforming unit. About 30 min prior to the Feed Gas Shutdown, the fuel flow to the furnace of the (primary) reforming unit is further reduced, from 6200 Nm³/h to 1500-2500 Nm³/h, and the fuel gas pressure is further reduced, from 0.6 barg to 0.1 - 0.15 barg, without a proportionate reduction in process gas. This results in a reduction of the outlet temperature of the primary reformer from about 680-690 °C to about 640 °C. At the same time, due to the reduced reactor temperature, the methane conversion is reduced as well, with the concentration of methane remaining in the product stream at the outlet of the primary reformer increasing from about 22% to about 29%, and the methane remaining in the product stream at the outlet of the secondary reformer increasing from about 1.8% to about 2.5%. It was observed that this had little effect on the downstream ammonia synthesis process.

Next, the flow of the process gas was stopped (= Feed Gas Shutdown). No temperature rise was observed at the outlet of the reformer, and no temperature shock was observed in the furnace of the (primary) reformer. At the same time, the air flow to the secondary reformer automatically stopped, and the waste gas flow from the cold box, which is used as a second source of fuel for the furnace of the primary reformer, stopped as well.

Subsequent actions for the total shutdown include shutting down the other units in the hydrogen production section, in particular the methanation unit. When the air supply is stopped, only steam is passing through the reforming and shift conversion units, and steam is vented upstream the CO₂ removal unit. Subsequently, the steam flow is adjusted to cool down the plant, and the steam is gradually replaced by nitrogen to avoid condensation. After that, nitrogen is circulated for final cooling. This procedure takes about 2 working shifts, which is much shorter than a shutdown protocol wherein the methanation unit is stopped first, which takes about 1 to 2 days.

## Claims

1. a method for shutting down a chemical plant comprising a hydrogen production system, wherein the hydrogen production system comprises a reforming unit for the conversion of a gaseous hydrocarbon into hydrogen, wherein the reforming unit comprises a reactor and a furnace, wherein the reactor of the reforming unit is provided with a feed of a process gas comprising a gaseous hydrocarbon, and wherein the furnace of the reforming unit is provided with a feed of a fuel gas;
**characterized in that** the method comprises the steps of
(i) reducing the feed of the fuel gas to the furnace of the reforming unit, particularly without a proportionate reduction in the feed of the process gas, thereby reducing the temperature in the reactor of the reforming unit, and subsequently,
(ii) stopping the feed of the process gas comprising the gaseous hydrocarbon to the reactor of the reforming unit.

2. The method according to claim 1,
wherein the hydrogen production system comprises a primary reformer, comprising a furnace and a reactor, a secondary reformer, a shift reactor, in particular a high-temperature shift reactor and a low-temperature shift reactor, a CO₂ removal unit and a methanation unit;
wherein the reactor of the primary reformer is provided with a feed of a process gas comprising a gaseous hydrocarbon, and wherein the furnace of the primary reformer is provided with a feed of a fuel gas;
**characterized in that** the method comprises the steps of
(i) reducing the feed of the fuel gas to the furnace of the primary reformer, thereby reducing the temperature in the reactor of the primary reformer, particularly the temperature at an outlet of the reactor of the primary reformer; and subsequently,
(ii) stopping the feed of the process gas comprising the gaseous hydrocarbon to the reactor of the primary reformer.

3. The method according to claim 1 or 2, wherein the chemical plant is an ammonia production plant, which further includes an ammonia synthesis loop located downstream of the hydrogen production system.

4. The method according to any one of claims 1 to 3, wherein step (i) is performed between 15 and 60 min prior to step (ii).

5. The method according to any one of claims 1 to 4, wherein the operating capacity of the chemical plant is reduced to a minimum operating capacity before step (i).

6. The method according to any one of claims 1 to 5 wherein, in step (i), the temperature at the outlet of the reforming unit is reduced by 35 °C to 70 °C, in particular by 40 °C to 50 °C.

7. The method according to any one of claims 1 to 6, wherein, in step (i), the conversion of the hydrocarbon to hydrogen in the primary reformer is reduced.

8. The method according to any one of claims 1 to 7, wherein step (i) comprises reducing the pressure and/or flow rate of the feed of the fuel gas to the furnace of the reforming unit.

9. The method according to claim 8, wherein the pressure of the feed of fuel gas is reduced by at least 50%, particularly by at least 60% or 70%, such as by between 60% and 90% or between 70% and 80%; and/or wherein the flow rate of the feed of fuel gas is reduced by at least 40%, particularly by at least 50%, such as by between 50% and 75% or between 55% and 65%.

10. The method according to claim 8 or 9, comprising a simulation step prior to step (i), wherein said simulation step comprises simulating a method for shutting down a chemical plant comprising a hydrogen production system, thereby obtaining an optimal rate for reducing the pressure and/or flow rate of the feed of fuel gas and/or an optimal rate for reducing the temperature at the outlet of the reforming unit.

11. The method according to claim 10, wherein, in step (i), the optimal rate for reducing the pressure and flow of the feed of fuel gas and/or the optimal rate for reducing the temperature at the outlet of the reforming unit are applied.

12. The method according to any one of claims 2 to 11, wherein step (ii) further comprises simultaneously stopping the air flow to a secondary reformer.

13. The method according to any one of claims 1 to 12, wherein, after step (ii), steam is passed through the hydrogen production system, and wherein the steam is gradually replaced by nitrogen.

14. The method according to any one of claims 1 to 13, wherein the process gas comprising a gaseous hydrocarbon is natural gas.
